# EUROPÄISCHE PATENTSCHRIFT

(11) **EP 3 858 590 B1**
(45) Veröffentlichungstag und Bekanntmachung des Hinweises auf die Patenterteilung: **02.08.2023**
(21) Anmeldenummer: 21153394.8
(22) Anmeldetag: 26.01.2021
(51) Int. Cl.: B30B 5/06, G01B 11/30, G01B 11/25, B30B 15/26, B27N 3/24, B27N 1/02, G01B 11/16

(54) **VERFAHREN ZUR ÜBERWACHUNG EINES STAHLBANDES IN EINER KONTINUIERLICHEN PRESSE UND KONTINUIERLICHE PRESSE**
CONTINUOUS PRESS AND METHOD FOR MONITORING A STEEL STRIP IN A CONTINUOUS PRESS
PROCÉDÉ DE SURVEILLANCE D'UNE BANDE D'ACIER DANS UNE PRESSE CONTINUE ET PRESSE CONTINUE

(30) Priorität: 29.01.2020 DE 102020000570
(43) Veröffentlichungstag der Anmeldung: 04.08.2021
(73) Patentinhaber: Siempelkamp Maschinen- und Anlagenbau GmbH, 47803 Krefeld (DE)
(72) Erfinder: Hüneke, Jörg Heinz, 47798 Krefeld (DE); Marx, Tobias, 47661 Issum (DE); Giesen, Maximilian, 47051 Duisburg (DE)
(74) Vertreter: Andrejewski - Honke Patent- und Rechtsanwälte Partnerschaft mbB

(56) Entgegenhaltungen:
- EP-A2- 0 909 620
- WO-A1-2015/114433
- WO-A1-2017/140813
- DE-A1- 10 342 903
- DE-A1-102004 010 898
- DE-A1-102005 024 692
- DE-A1-102017 110 301
- US-A1- 2013 098 127

## Beschreibung

Die Erfindung betrifft ein Verfahren zur Überwachung eines umlaufenden Stahlbandes in einer kontinuierlichen Presse für Werkstoffplatten, insbesondere Holzwerkstoffplatten, auf Deformationen, wobei mit Hilfe des Stahlbandes bei einer vorgewählten Bandgeschwindigkeit Druck auf eine Pressmatte zur Erstellung der Werkstoffplatte ausgeübt wird,

und wobei das umlaufende Stahlbad über wenigstens einen optoelektronischen Detektor zumindest auf einer Seite des Stahlbandes auf Deformationen überwacht wird,

indem ein Lichtsender ein Lichtmuster auf das Stahlband sendet und ein Lichtempfänger im Reflexionsverfahren das Lichtmuster aufnimmt und an eine Auswerteeinheit weitergibt, die Veränderungen feststellt.

Die Erfindung betrifft ferner eine kontinuierliche Presse mit einer optoelektronischen Überwachungsvorrichtung zur Durchführung des Verfahrens.

Als Lichtempfänger wird in Regel eine Kamera benutzt.

Unter Deformationen sind in dieser Erfindung alle Unebenheiten, Anomalien oder Risse in der Stahlbandoberfläche zu verstehen.

Typischerweise entstehen Werkstoffplatten, beispielsweise aus Holzfasern oder -spänen, in einem kontinuierlichen Pressprozess, bei dem mit Bindemittel vermengtes und zu einer Pressmatte gestreutes Gut zwischen zwei umlaufenden Stahlbändern geformt und ausgehärtet wird.

Besonders die Oberfläche der Werkstoffplatten wird durch die Oberflächenstruktur bzw. Oberflächengüte der Stahlbänder beeinflusst. Unter anliegendem Pressdruck werden Unebenheiten des Stahlbandes auf die Werkstoffplatte übertragen. Insbesondere bei Dünnstplatten ist eine ebene und gleichmäßige Produktoberfläche wünschenswert, weswegen das Stahlband möglichst keine Beschädigungen aufweisen sollte.

Des Weiteren ist das Stahlband das kostenintensivste Einzelbauteil einer kontinuierlichen Presse. Aufgrund der Bauform und mitunter hohen Bandgeschwindigkeiten von > 2 m/s ist eine manuelle Überwachung auf typische Schadensbilder während des Betriebes kaum möglich. Ein schädliches Betriebsverhalten ist erst bei Stillstand und Inspektion des Stahlbandes erkennbar, und das wegen des verbauten Zustandes auch nur unzureichend möglich.

Typische Schadensbilder sind unter anderem:
- Dellen (Beulen) in der Stahlbandoberfläche
- Kratzer in der Oberfläche
- Kantenrisse

Kantenrisse entstehen beispielsweise durch fehlende Radien an der Stahlbandkante. Dadurch können zu hohe Spannungen entstehen. Das Fehlen der Radien kann durch Abrasion im Randbereich hervorgerufen werden.

Die Inspektion eines solchen Stahlbandes bei Stillstand ist sehr zeitaufwändig, denn ein solches Band kann bis zu 200 m lang sein. Im Wartungsfall des Stahlbandes muss jede Beschädigung manuell gesucht und ausgebessert werden.

Mit dem oberbegrifflich beschriebenen Verfahren werden beispielsweise relativ kurze Bleche auf Deformationen untersucht. Man kennt es beispielsweise von der Inspektion bei Automobilen auf Schäden oder Dellen in der Oberfläche von Kotflügeln.

Aber auch aus der Papierindustrie, wo während des Kalandrierens Druck auf die Papierbahn bringende Stahlbänder überwacht werden müssen, sind solche Verfahren beispielsweise aus der EP 2304105 B1 bekannt. Diese Stahlbänder sind nicht so lang wie die in der Herstellung von Werkstoffplatten genutzten Stahlbänder. Aber trotzdem ist es bereits sehr mühselig für das Wartungs- und Ausbesserungspersonal, die erkannten Fehler im Band tatsächlich aufzuspüren. Das Finden der von der optoelektronischen Detektion erkannten Stelle im Stahlband ist deshalb schwierig, weil die Deformation im Stahlband mit dem beschriebenen Verfahren nicht exakt an einem bestimmten, zugänglichen Wartungspunkt gestoppt werden kann. Bei derartig schnell laufenden Anlagen kann das Stahlband nur langsam abgebremst werden und zudem ist ein Schlupf an den Umlenkwalzen nicht zu vermeiden.

Dokument DE 10 2005 024692 A1 offenbart ein Verfahren zur Überwachung wenigstens eines umlaufenden Stahlbandes in einer kontinuierlichen Presse für Werkstoffplatten gemäss dem Oberbegriff des Anspruchs 1.

Es ist deshalb die Aufgabe der Erfindung, eine automatisierte Information über den Zustand des Stahlbandes zu erhalten und detektierte Deformationen auf einfache Art und Weise für Wartungsarbeiten zugänglich zu machen.

Die Aufgabe wird verfahrensmäßig mit den Merkmalen des Anspruchs 1 gelöst und insbesondere dadurch, dass dem Stahlband ein Anfangspunkt der Detektormessung zugeordnet wird, der von dem fixierten optoelektronischen Detektor erfasst wird und alle weiteren erkannten Deformationen mit einem Zeit- oder Abstands-Entfernungswert von diesem Anfangspunkt an die Auswerteeinheit weitergegeben werden.

Ein solcher Anfangspunkt kann beispielsweise der zeitliche oder örtliche Punkt sein, auf den die Kamera gerichtet ist, wenn das Band startet. Mit Hilfe der bekannten Geschwindigkeitszunahme und der bekannten Länge des Stahlbandes ist der augenblickliche Ort des Punktes jederzeit berechenbar.

Auf diese Weise sind aber auch die Koordinaten jeder Deformation auf dem Stahlband in Abhängigkeit von dem Anfangspunkt der Detektormessung bekannt. Diese Koordinaten werden dann beispielweise im laufenden Betrieb durch die Berechnung der zeitlichen Entfernung mit Hilfe der Geschwindigkeit und der Stahlbandlänge bestimmt. Damit ist der genaue Ort der Deformation auf dem Band eindeutig definiert. Die Größe der Deformation wird dabei in bekannter Art aus der Reflexionsmessung ermittelt, so dass ein Grenzwert festgelegt werden kann, ab dem ein Eingreifen erforderlich ist.

Besonders vorteilhaft ist, wenn das Stahlband mit einer Referenzmarkierung versehen wird, die von dem optoelektronischen Detektor als Anfangspunkt der Detektormessung erfasst wird.

Als Referenzmarkierung kann beispielsweise eine punktuelle oder lineare, zum Stahlband kontrastreiche Farbmarkierung festgelegt sein oder in besonders einfacher Weise die für ein optoelektronisches Detektorsystem leicht erkennbare Verbindungsschweißnaht des Stahlbandes Verwendung finden. So wird bei jeder Umdrehung des Stahlbandes die Referenzmarkierung triggerartig neu vom Detektorsystem erfasst und der Zeit- oder Abstands-Entfernungswert zu einer Deformation wird kontinuierlich in nur einem Bandumlauf genau ermittelt. Damit entfallen schlupfabhängige Verschiebungen, die gegenüber dem nur einmal beim Start der kontinuierlichen Presse festgelegten Anfangspunkt der Messung auftreten können. Der Anfangspunkt der Detektormessung wird also bei jeder Umdrehung durch die Referenzmarkierung neu gesetzt.

Es ist bevorzugt, dass bei jedem Durchlauf einer Deformation durch den optoelektronischen Detektor eine Zeitangabe mit abgespeichert wird.

Außerdem ist es vorteilhaft, wenn bei wenigstens einem weiteren Durchlauf einer Deformation durch den optoelektronischen Detektor die Bildgröße der Deformation mit einer der vorgegangenen Durchläufe verglichen wird.

Auf diese Weise ist die Größenentwicklung der Deformation über die Zeit nachvollziehbar. Wenn ein vorher definierter Grenzwert überschritten oder angefahren wird, kann aber auch automatisch ein Warnsignal erzeugt werden. Die Echtzeitdaten werden in einer Datenbank mit einer Zeitangabe versehen und abgespeichert. Somit ist auch die örtliche Veränderung des Stahlbandes über die Zeit nachvollziehbar. Erfährt das Stahlband beispielhaft innerhalb einer kurzen Zeit vermehrt Schädigungen, kann dieser Umstand mit Prozessparametern abgeglichen werden, um mögliche Ursachen zu detektieren und weitere Beschädigung zu vermeiden. Ebenfalls kann der allgemeine Zustand und die Güte des Stahlbandes unkompliziert überwacht werden. Es sei darauf hingewiesen, dass die Auswerteeinheit auch selbstlernend programmiert sein kann, so dass sie nach einer Lernphase selbstständig und automatisch ein Warnsignal bei einer bestimmten Entwicklung der Deformationen abgeben kann.

In besonders bevorzugter Weise wird von der Auswerteeinheit eine vorzugsweise zweidimensionale abgewickelte Abbildung des Stahlbandes mit den Deformationsdarstellungen auf einem Monitor erzeugt.

In diese rechteckige Darstellung des Stahlbandes können durch die bekannte Position die Koordinaten jeder Deformation eingetragen sein. Über eine vorgesehene Möglichkeit des zeitlichen Scrollens ist die Entwicklung jeder Deformation rasch erkennbar. Durch die Erkennung des Entstehungszeitpunktes einer Deformation ist eine Ursachenermittlung deutlich vereinfacht.

Es ist bevorzugt, eine reparaturbedürftige Deformation unter Berücksichtigung des gespeicherten Zeit- oder Abstands-Entfernungswerts in Bezug auf den Anfangspunkt der Detektormessung in der Auswerteeinheit zu eine geeignete Wartungsposition zu fahren und dort anzuhalten.

Da der Abstand jeder Deformation beispielsweise von der Referenzmarkierung erfasst und abgespeichert wird, kann somit bei definierter (langsamer) Vorschubgeschwindigkeit des Stahlbandes eine als kritisch erkannte und zu wartende Deformation auf einfache Weise zu einer bestimmten Position gefahren werden, wo man diese Beschädigung leicht erreicht und ausbessern kann. Damit wird es dem Wartungspersonal besonders leicht gemacht, eine Deformation zu finden und auszubessern. Dazu kann es softwaremäßig vorgesehen sein, die Deformation auf dem Monitor in der zweidimensionalen Darstellung des Stahlbandes einfach mittels eines Zeigegerätes (Maus) anzuklicken. Entscheidet sich der Anwender eine Fehlstelle im Stahlband zu reparieren, kann er also in der visuellen Ausgabe den Defekt anwählen, wodurch die Anlagensteuerung die Schadensstelle auf eine vorher ausgewählte Reparaturposition verfährt.

Bevorzugt wird die Farbe und/oder Helligkeit des Lichtsenders mit Hilfe einer Kalibriereinrichtung im Sichtfeld des Lichtempfängers eingestellt.

Dies führt zur Minimierung von störenden Umgebungseinflüssen auf das Kamerasystem, wie beispielsweise veränderte Hallenbeleuchtung, seitlicher Lichteinfall, veränderte Farbtemperatur der Umgebung, sowie unterschiedlicher Beschaffenheit des vorliegenden Stahlbandes. Hierfür ist der Lichtsender beispielsweise geeignet, beliebige Wellenlängen zu emittieren (beispielhaft durch Verwendung einer RGB LED). Durch Einstellen von Leuchtintensität und Farbton können entsprechende Umgebungseffekte kompensiert werden. Beispielhaft ist bei rötlichem Umgebungslicht ein blaues Lichtmuster zu wählen, um einen maximalen Kontrast zur Umgebung zu erreichen. Zur Ermittlung der Umgebungsbedingungen befindet sich beispielsweise eine speziell bedruckte Kalibrierscheibe als Kalibriereinrichtung im Sichtfeld der Kamera. Da der Farbton des Lichtmusters dieser Scheibe bekannt sind, können die Umgebungsbedingungen softwaretechnisch ermittelt werden.

Vorrichtungsmäßig wird die Aufgabe durch eine kontinuierliche Presse gemäss Anspruch 8 mit
- wenigstens einem umlaufenden Stahlband zur Verdichtung einer bewegten Pressmatte mittels aufgebrachtem Druck durch Druckgeber,
- mit einer Steuerung zur Regelung der Stahlbandgeschwindigkeit und
- mit einer optoelektronischen Überwachungsvorrichtung, die einen Lichtsender umfasst, der ein Lichtmuster auf das Stahlband sendet, und einen Lichtempfänger, der geeignet ist, im Reflexionsverfahren das Lichtmuster aufzunehmen und an eine Auswerteeinheit weiterzugeben, die Veränderungen feststellt,
zur Durchführung des Verfahrens gemäß einem der Ansprüche 1 bis 7 gelöst und dadurch, dass das Stahlband einen Anfangspunkt der Detektormessung aufweist, der von dem fixierten optoelektronischen Detektor erfassbar ist, und dass alle weiteren erkannten Deformationen mit einem Zeit- oder Abstands-Entfernungswert von diesem Anfangspunkt der Detektormessung an die Auswerteeinheit weitergebbar und dort abspeicherbar sind.

Wie bereits in den Verfahrensansprüchen näher erläutert sollten weiterhin vorzugsweise
- wenigstens eine erfasste Deformation bei jedem Durchlauf durch den optoelektronischen Detektor in der Auswerteeinheit mit einer Zeitangabe versehbar sein, und/oder
- eine zweidimensionale Abbildung des Stahlbandes auf einem Monitor, der mit der Auswerteeinheit gekoppelt ist, mit Deformationen darstellbar sein, und/oder
- der Antrieb des Stahlbandes mit Hilfe der Steuerung zur Regelung der Stahlbandgeschwindigkeit geeignet sein, aufgrund von aufgezeichneten Abständen zwischen dem Anfangspunkt der Detektormessung und der Deformation, kritische Deformationen an eine Wartungsstation zu fahren.

Weiter ist es vorteilhaft wenn als Lichtmuster wenigstens eine über die Breite des Stahlbandes reichende Lichtlinie Verwendung findet.

Im Folgenden wird die Erfindung mit Hilfe der Figuren näher erläutert. Dabei zeigen
- Fig. 1: den Einlauf einer kontinuierlichen Presse und schematisch den Detektor und die Auswerteeinheit,
- Fig. 2: einen Lichtsender,
- Fig. 3: ein Lichtmuster auf dem Stahlband
- Fig. 4a bis 4g: die Veränderung des reflektierten Lichtmuster bei Bewegung des Stahlbandes mit einer Deformation und
- Fig. 5: die Darstellung des Stahlbandes auf einem Monitor.

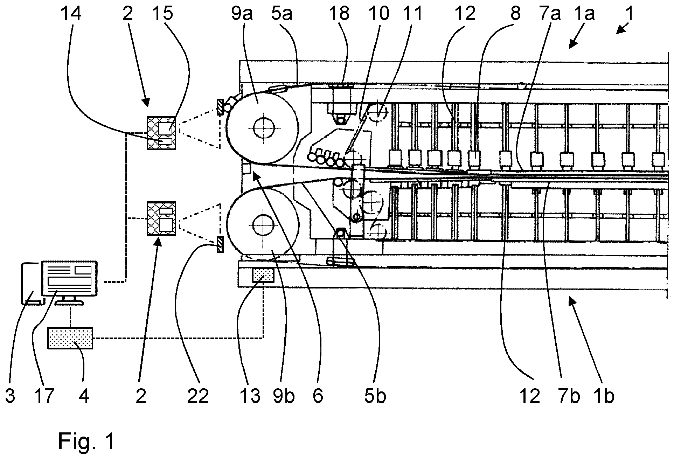

In Fig. 1 erkennt man den Einlaufbereich einer kontinuierlichen Doppelbandpresse 1, wie sie zur Herstellung von Werkstoffplatten, insbesondere Werkstoffplatten aus Holzwerkstoffen, verwendet wird. Es wird dargestellt, dass die kontinuierliche Presse 1 in ihrem grundsätzlichen Aufbau ein Pressenoberteil 1a mit oberer beheizbarer Druckplatte 7a und ein Pressenunterteil 1b mit unterer beheizbarer Druckplatte 7b aufweist. Rahmen 12, in denen auch Druckgeber 8 zur Druckgebung abgestützt sind, verbinden das Pressenoberteil 1a und das Pressenunterteil 1b. Im Pressenoberteil 1a sowie im Pressenunterteil 1b sind endlos umlaufende Stahlbänder 5a, 5b unter Bildung eines Pressspaltes geführt für die nicht dargestellte Pressmatte, wobei sich die Stahlbänder 5a, 5b unter Zwischenschaltung von Rollstäben 10 gegen die Druckplatten 7a, 7b abstützen. Die Rollstäbe 10 sind dabei mittels Rollstablagerbolzen an endlos umlaufenden Rollstabketten geführt, die jedoch nicht dargestellt sind. Die Ketten werden über die strichpunktiert angedeuteten Kettenumlenkrollen 11 geführt.

Die Stahlbänder 5a, 5b werden umlaufend über obere und untere Bandumlenktrommeln 9a, 9b geführt. Selbstverständlich sind analog auch am nicht dargestellten Pressenende derartige Bandumlenktrommeln vorgesehen. Aus Gründen der Übersichtlichkeit wurde auf die Gesamtdarstellung der kontinuierlichen Doppelbandpresse 1 verzichtet, denn das Stahlband 5a, 5b kann bis zu zweihundert Meter lang sein.

Im dargestellten Einlaufbereich der kontinuierlichen Presse 1 bilden das obere Stahlband 5a und das untere Stahlband 5b einen Einlaufzwickel für die nicht dargestellte Pressmatte, der auch als Einlaufmaul 6 bezeichnet wird.

In dem Ausführungsbeispiel ist vor jeder Umlenktrommel 9a, 9b ein optoelektronischer Detektor 2 installiert. Dieser optoelektronischer Detektor 2 besteht aus einem Lichtsender 14, beispielsweise einer LED-Leiste, und einem Lichtempfänger 15, beispielsweise einem Kamerasystem. Je nach Pressenbreite können die Bilder mehrerer Kameras über die Breite zu einem Bild kombiniert werden. Der Lichtsender 14 besteht aus zumindest einer Lichtquelle, welche direkt oder indirekt ein Lichtmuster 16 auf die spiegelnde Stahlbandoberfläche projiziert. Im Ausführungsbeispiel wird das Lichtmuster 16 auf den Walzenumfang der Umlenktrommeln 9a, 9b projiziert und trifft hier auf die Stahlbandoberfläche des oberen bzw. unteren Stahlbandes 5a, 5b. An den Umlenktrommeln 9a, 9b besteht eine hohe Bandspannung, wodurch das Stahlband 5a, 5b unmittelbar auf dem Trommelumfang aufliegt. Das Kamerasystem 15 erfasst sowohl das projizierte Lichtmuster 16, als auch die umliegende Stahlbandoberfläche in einem Kameraausschnitt. Durch die gleichmäßigen Reflektionseigenschaften eines unbeschädigten und gereinigten Stahlbandes 5a, 5b wird das projizierte Lichtmuster 16 unverfälscht reflektiert und von dem Kamerasystem 15 erfasst. Das Lichtmuster 16 kann in diversen Formen ausgeführt sein. Verwendbar sind Schachbrettmuster, Rasterlinien, farbige Bildprojektionen etc., in diesem Ausführungsbeispiel soll wenigstens eine waagrechte Linie über die Breite des Stahlbandes dargestellt sein.

Die durch das Kamerasystem aufgezeichnete reflektierte Linie wird an eine Auswerteeinheit 3 gesendet und kann dort auf Veränderungen untersucht werden. Die reflektierte Linie kann auch auf einem Monitor 17 dargestellt werden. Wenn Deformationen den Bereich des durch den Lichtsender 14 auf die Stahlbandoberfläche aufgebrachten Lichtmusters 16, in diesem Beispiel also einer Linie, wird sich die mit dem Kamerasystem 15 aufgenommene Reflektion verzerren.

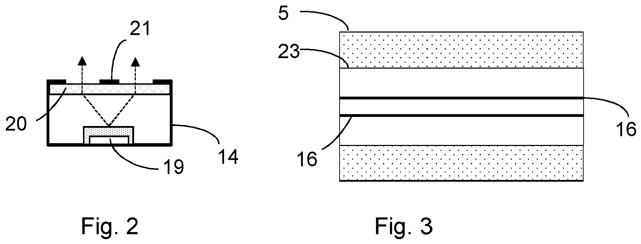

Beispielhaft zeigen Fig. 2 einen Lichtsender 14 und Fig. 3 ein Lichtmuster 16 auf einem Stahlband. Der Lichtsender umfasst hier beispielhaft eine Lichtquelle 19 in Form einer Stahlband-breiten LED-Leiste, eine Blende 21 und einen Diffusor 20. Die Pfeile deuten an, dass zwei Lichtlinien ausgesendet werden. Diese bilden sich in Form von zwei Linien als Lichtmuster 16 auf dem Stahlband 5, 5a, 5b ab. Beispielhaft ist auch der Kameraausschnitt 23 angedeutet, der dieses reflektierte Lichtmuster quasi beobachtet, wenn das Stahlband 5, 5a, 5b läuft.

Zur Detektion der genannten Deformationen können unterschiedliche Wirkprinzipien eingesetzt werden. Geometrische Verformungen in der Stahlbandoberfläche wie Beulen oder Dellen ändern den Ausfallswinkel der Reflektion des Lichtmusters 16 und führen damit optisch zu einer Krümmung des projizierten Lichtmusters. Die Abweichung zum Originalmuster wird durch den Lichtempfänger 15 und entsprechende Auswertesoftware in der Auswerteeinheit 3 erkannt.

Aufgrund der fest eingestellten Position von Lichtsender 14 und Lichtempfänger 15 (Kamerasystem) ist die Position des Lichtmusters 16 relativ zum Kameraausschnitt 23 zunächst konstant. Durch den kontinuierlichen Stahlbandumlauf tastet das Lichtmuster iterativ jeden Flächenpunkt des Stahlbandes ab. Durchfährt eine Deformation, beispielsweise eine Beule, das Lichtmuster 16, entsteht eine optische Verzerrung durch die oben beschriebene Änderung des Reflektionswinkels. Im Beispiel eines Linienmusters ist beim Erreichen des Beulenmittelpunktes eine maximale radiale Krümmung festzustellen. Über die Maximalabweichung zwischen Krümmung und Basislinie kann die Größe der Deformation ermittelt werden.

Die Position der Deformation im Bezug zur Stahlbandbreite ergibt sich durch die Umrechnung des Krümmungsauschlags im Bild auf die reelle Breite des Stahlbandes. Die Position in Laufrichtung kann ebenfalls softwaretechnisch ermittelt werden. Hierfür ist der Weg des Stahlbandes beispielhaft über eine Referenzmarkierung oder einfach von dem Startpunkt des Stahlbandes zu verfolgen. Weiter können bestehende Merkmale wie die Schweißnaht als triggerartiges Synchronisationsmerkmal genutzt werden. Da die Geschwindigkeit des Stahlbandes 5 ständig über einen Sensor 13 gemessen und die Länge des Stahlbandes sowieso bekannt sind, ist die genaue Festlegung des Ortes einer Deformation bezogen auf die Bandlänge ab einem Anfangspunkt der Detektormessung oder einem Referenzpunkt kein Problem.

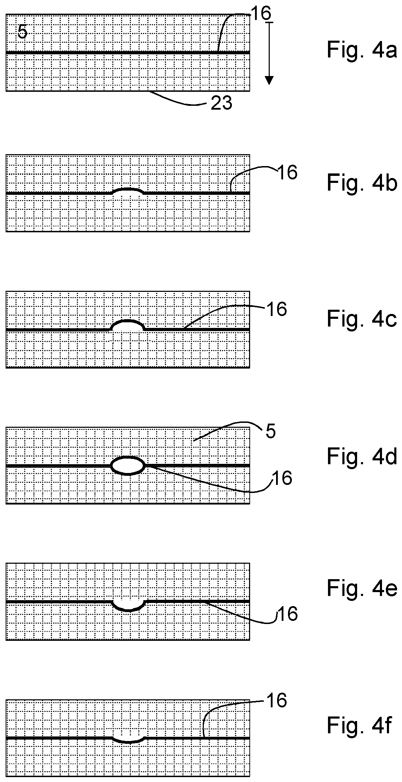

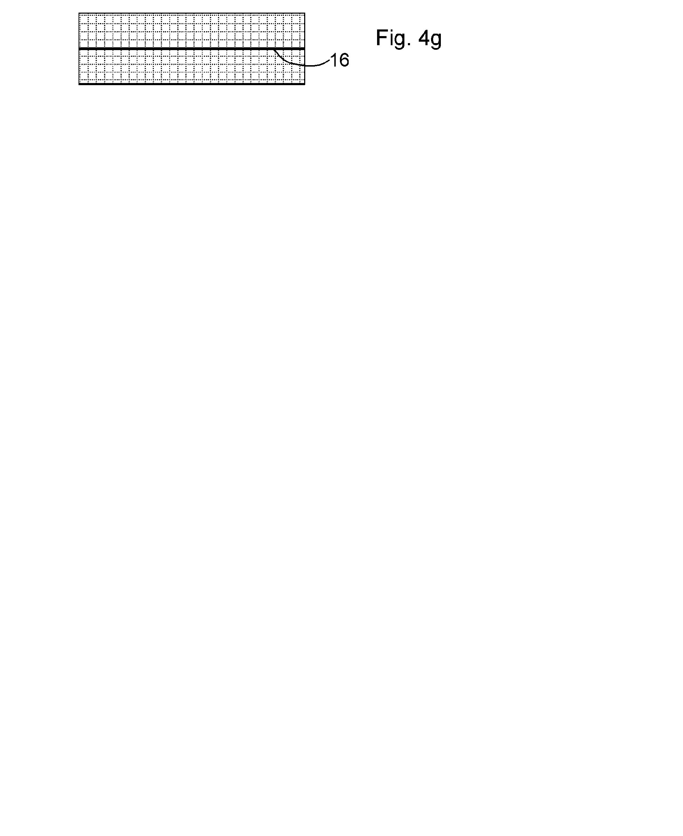

Zum besseren Verständnis der Reflektionserscheinung zeigen die Figuren 4a bis 4g als zeitliche Abfolge, also quasi als Einzelbilder eines Filmes, wie eine Deformation erkannt und eingeschätzt werden kann. In Fig. 4a ist ein möglicher Kameraausschnitt 23 mit einer Linie als Lichtmuster auf einem unbeschädigtem Stahlband 5 zu erkennen. Der Pfeil zeigt dabei die Richtung des Stahlbandumlaufes an. Oberhalb der Linie, also sich dem Lichtmuster nähernd, befindet sich zum späteren Zeitpunkt der Fig. 4b eine geometrische Deformation in der Stahlbandoberfläche, welche durch den Bandumlauf mit ihrem Randbereich das Lichtmuster, also die Linie 16, tangiert. Hierdurch ist eine Krümmung der Reflektion festzustellen. Mit weiterem Vorschub des Stahlbandes 5 ist eine Ausweitung der Krümmung festzustellen (vgl. Fig. 4c), bis der Deformationsmittelpunkt auf der Lichtmusterlinie liegt. Die Lichtkrümmung liegt nun symmetrisch gespiegelt um den Deformationsmittelpunkt entlang des Umfangs vor (vgl. Fig. 4d). Die Abbildungen 4e bis 4g zeigen, wie die Deformation das Lichtmuster 16 verlässt und die Krümmung schwindet.

Bei Erfassung einer Deformation wird die Position und Größe in einer Datenbank der Auswerteeinheit 3 abgespeichert. Hiernach kann auf Wunsch nach vordefinierten Regeln eine Meldung an den Anlagenführer erfolgen. Über einen optionalen Monitor 17 kann der Anlagenführer den Zustand des Stahlbandes manuell beurteilen und die Notwendigkeit von partiellen Reparaturen feststellen.

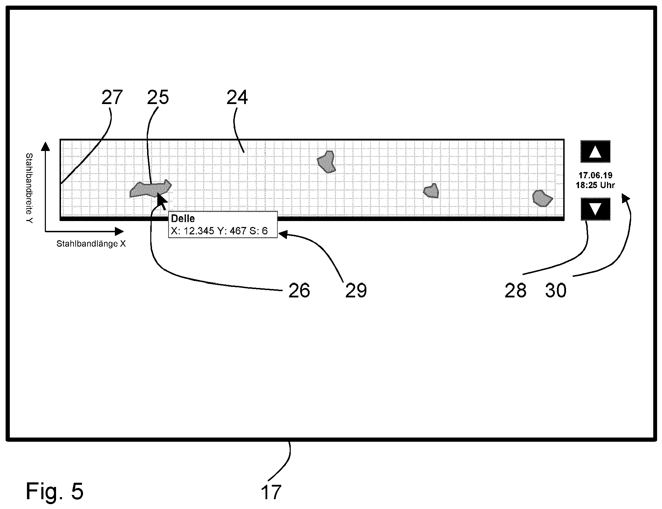

Fig. 5 zeigt schematisch die Darstellung des Bandes 5 im abgewickelten Zustand 24 mit seinen Deformationen auf einem Monitor 17. Der linke Rand des Bandes 27 entspricht dem Anfangspunkt der Detektion. Nach einem Anlagenstillstand kann die Software durch einen Klick auf eine entsprechende Deformation 25 (siehe angedeuteten Cursor 26) die genauen Koordinaten 29 ausgeben, bezogen auf den Anfangspunkt der Detektion 27. Ferner kann dadurch über eine Schnittstelle zur Anlagensteuerung 4 das Stahlband 5 an eine vorher definierte Wartungs- oder Reparaturposition 18 verfahren. Somit bleibt die manuelle Suche der Schadensstelle erspart.

Zu der angeklickten Deformation werden nicht nur die exakten Koordinaten 29 auf der Abwicklung 24 angezeigt, sondern zudem wird beispielsweise an der rechten Seite des Monitors eine Zeitangabe zugeordnet, in der die Deformation 25 die dargestellte Größe hatte, wobei die Entwicklung der Größe über Zeitwahltaster 28 zurückverfolgt werden kann.

### Bezugszeichenliste

| | |
|---|---|
| 1 | kontinuierliche Doppelbandpresse |
| 1a | Oberer Pressenteil |
| 1b | Unterer Pressenteil |
| 2 | optoelektronischer Detektor |
| 3 | Auswerteeinheit |
| 4 | Steuerung für die Stahlbandgeschwindigkeit |
| 5a | Oberes Stahlband |
| 5b | Unteres Stahlband |
| 6 | Einlaufmaul |
| 7a | Obere Druckplatte |
| 7b | Untere Druckplatte |
| 8 | Druckgeber |
| 9a | Obere Bandumlenktrommel |
| 9b | Untere Bandumlenktrommel |
| 10 | Rollstäbe |
| 11 | Kettenumlenkrollen |
| 12 | Rahmen |
| 13 | Messfühler für die Stahlbandgeschwindigkeit |
| 14 | Lichtsender |
| 15 | Lichtempfänger, Kamerasystem |
| 16 | Lichtmuster, hier Linie |
| 17 | Monitor |
| 18 | Wartungsposition |
| 19 | Lichtquelle |
| 20 | Diffusor |
| 21 | Blende |
| 22 | Kalibriereinrichtung |
| 23 | Kameraausschnitt |
| 24 | Abgewickelte Darstellung des Stahlbandes 5 |
| 25 | Deformation |
| 26 | Cursor |
| 27 | Anfangspunkt der Detektion |
| 28 | Zeitwahltaster |
| 29 | Koordinaten |
| 30 | Zeitangabe |

## Patentansprüche

1. Verfahren zur Überwachung wenigstens eines umlaufenden Stahlbandes (5a, 5b) in einer kontinuierlichen Presse (1) für Werkstoffplatten, insbesondere Holzwerkstoffplatten, auf Deformationen, wobei mit Hilfe des Stahlbandes (5a, 5b) bei einer vorgewählten Bandgeschwindigkeit Druck auf eine Pressmatte zur Erstellung der Werkstoffplatte ausgeübt wird, und wobei das umlaufende Stahlband (5a, 5b) über wenigstens einen optoelektronischen Detektor (2) zumindest auf einer Seite des Stahlbandes (5a, 5b) auf Deformationen überwacht wird, indem ein Lichtsender (14) ein Lichtmuster (16) auf das Stahlband (5a, 5b) sendet und ein Lichtempfänger (15) im Reflexionsverfahren das Lichtmuster (16) aufnimmt und an eine Auswerteeinheit (3) weitergibt, die Veränderungen feststellt, **dadurch gekennzeichnet, dass**
das Stahlband (5a, 5b) einen Anfangspunkt der Detektormessung (27) aufweist, der von dem optoelektronischen Detektor (2) erfasst wird und erkannte Deformationen mit einem Zeit- oder Abstands-Entfernungswert von diesem Anfangspunkt der Detektormessung (27) an die Auswerteeinheit (3) weitergegeben werden.

2. Verfahren gemäß Anspruch 1, **dadurch gekennzeichnet, dass** das Stahlband (5a, 5b) mit einer Referenzmarkierung versehen wird, die von dem optoelektronischen Detektor als Anfangspunkt der Detektormessung (27) erfasst wird.

3. Verfahren gemäß Anspruch 1 oder 2, **dadurch gekennzeichnet, dass** bei jedem Durchlauf einer Deformation (25) durch den optoelektronischen Detektor (2) eine Zeitangabe (30) mit abgespeichert wird.

4. Verfahren gemäß einem der Ansprüche 1 bis 3, **dadurch gekennzeichnet, dass** bei wenigstens einem weiteren Durchlauf einer Deformation (25) durch den optoelektronischen Detektor (2) die Bildgröße der Deformation (25) mit einer der vorgegangenen Durchläufe verglichen wird.

5. Verfahren gemäß einem der Ansprüche 1 bis 4, **dadurch gekennzeichnet, dass** von der Auswerteeinheit (3) eine vorzugsweise zweidimensionale abgewickelte Darstellung (24) des Stahlbandes (5a, 5b) mit den Deformationsdarstellungen auf einem Monitor (17) erzeugt wird.

6. Verfahren gemäß einem der Ansprüche 3 bis 5, **dadurch gekennzeichnet, dass** eine reparaturbedürftige Deformation (25) unter Berücksichtigung des gespeicherten Zeit- oder Abstands-Entfernungswerts in Bezug auf den Anfangspunkt der Detektormessung (27) in der Auswerteeinheit (3) zu einer geeigneten Wartungsposition (18) gefahren und dort angehalten wird.

7. Verfahren gemäß einem der Ansprüche 1 bis 6, **dadurch gekennzeichnet, dass** die Farbe und/oder Helligkeit des Lichtsenders (14) mit Hilfe einer Kalibriereinrichtung (22) im Sichtfeld des Lichtempfängers (15) eingestellt wird.

8. Kontinuierliche Presse mit
- wenigstens einem umlaufenden Stahlband (5a, 5b) zur Verdichtung einer bewegten Pressmatte mittels aufgebrachtem Druck durch Druckgeber (8),
- mit einer Steuerung (4) zur Regelung der Stahlbandgeschwindigkeit und
- mit einer optoelektronischen Überwachungsvorrichtung (2), die einen Lichtsender (14) umfasst, der ein Lichtmuster (16) auf das Stahlband (5a, 5b) sendet, und einem Lichtempfänger (15), der geeignet ist, im Reflexionsverfahren das Lichtmuster (16) aufzunehmen und an eine Auswerteeinheit (3) weiterzugeben, die Veränderungen feststellt,
**dadurch gekennzeichnet, dass** die kontinuierliche Presse zur Durchführung des Verfahrens gemäß einem der Ansprüche 1 bis 7 geeignet ist,
dass das Stahlband (5a, 5b) einen Anfangspunkt der Detektormessung (27) aufweist, der von dem fixierten optoelektronischen Detektor (2) erfassbar ist,
und dass alle weiteren erkannten Deformationen mit einem Zeit- oder Abstands-Entfernungswert von diesem Anfangspunkt der Detektormessung an die Auswerteeinheit (3) weitergebbar und dort abspeicherbar sind.

9. Kontinuierliche Presse gemäß Anspruch 8, **dadurch gekennzeichnet, dass** wenigstens eine erfasste Deformation (25) bei jedem Durchlauf durch den optoelektronischen Detektor (2) in der Auswerteeinheit (3) mit einer Zeitangabe (30) versehbar ist.

10. Kontinuierliche Presse gemäß Anspruch 8 oder 9, **dadurch gekennzeichnet, dass** eine zweidimensionale Abbildung des Stahlbandes (5a, 5b) als Abwicklung 24 auf einem Monitor 17, der mit der Auswerteeinheit 3 gekoppelt ist, mit Deformationen darstellbar ist.

11. Kontinuierliche Presse gemäß einem der Ansprüche 8 bis 10, **dadurch gekennzeichnet, dass** der Antrieb des Stahlbandes (5a, 5b) mit Hilfe der Steuerung (4) zur Regelung der Stahlbandgeschwindigkeit geeignet ist, aufgrund von aufgezeichneten Abständen zwischen dem Anfangspunkt der Detektormessung (27) und der Deformation, kritische Deformationen an eine Wartungsstation zu fahren.

12. Kontinuierliche Presse gemäß einem der Ansprüche 8 bis 11, **dadurch gekennzeichnet, dass** als Lichtmuster (16) wenigstens eine über die Breite des Stahlbandes reichende Lichtlinie Verwendung findet.

## Claims

1. A method of monitoring at least one circulating steel belt (5a, 5b) in a continuous press (1) for material boards, more particularly wood based boards, for deformations, wherein by way of the steel belt (5a, 5b) at a preselected belt speed, pressure is exerted on a press mat for the production of the material board and wherein the circulating steel belt (5a, 5b) is monitored for deformations by means of at least one optoelectronic detector (2) at least on one side of the steel belt (5a, 5b) in that a light emitter (14) emits a light pattern (16) onto the steel belt (5a, 5b) and, in a reflection process, a light receiver (15) takes up the light pattern (16) and forwards it to an evaluation unit (3) which detects changes, **characterised in that** the steel belt (5a, 5b) has a starting point of the detector measurement (27) which is recorded by the optoelectronic detector (2), and detected deformations are forwarded to the evaluation unit (3) with a time- or interval-distance value from this starting point of the detector measurement (27).

2. The method according to claim 1, **characterised in that** the steel belt (5a, 5b) is provided with a reference marking that is recorded by the optoelectronic detector as the starting point of the detector measurement (27).

3. The method according to claim 1 or 2, **characterised in that** with each pass of a deformation (25) a time specification (30) is also stored by the optoelectronic detector (2).

4. The method according to any one of claims 1 to 3, **characterised in that** in the case of at least one further pass of a deformation (25), the image size of the deformation (25) is compared by the optoelectronic detector (2) with one of the previous passes.

5. The method according to any one of claims 1 to 4, **characterised in that** the evaluation unit (3) produces a preferably two-dimensional unwound representation (24) of the steel belt (5a, 5b) showing the deformations on a monitor (17).

6. The method according to any one of claims 3 to 5, **characterised in that** taking into account the stored time- or interval-distance value in relation to the starting point of the detector measurement (27) in the evaluation unit (3), a deformation (25) requiring repair is moved to a suitable maintenance position (18) and stopped there.

7. The method according to any one of claims 1 to 6, **characterised in that** the colour and/or brightness of the light emitter (14) is adjusted by way of a calibration device (22) in the field of view of the light receiver (15).

8. A continuous press with
- at least one circulating steel belt (5a, 5b) for compacting a moved press mat by means of pressure applied by pressure elements (8),
- with a control unit (4) for regulating the steel belt speed and
- with an optoelectronic monitoring device (2), which comprises a light emitter (14) which emits a light pattern (16) onto the steel belt (5a, 5b), and a light receiver (15) which, in a reflection process, is able to take up the light pattern (16) and forward it to an evaluation unit (3) which detects changes,
**characterised in that** the continuous press is suitable for implementing the method according to any one of claims 1 to 7,
**in that** the steel belt (5a, 5b) has a starting point of the detector measurement (27) which can be recorded by the fixed optoelectronic detector (2),
and **in that** all further detected deformations can be forwarded to the evaluation unit (3) and stored there with a time- or interval-distance value from this starting point of the detector measurement.

9. The continuous press according to claim 8, **characterised in that** at least one recorded deformation (25) can be provided with a time specification (30) in the evaluation unit (3) on each pass through the optoelectronic detector (2).

10. The continuous press according to claim 8 or 9 **characterised in that** a two-dimensional image of the steel belt (5a, 5b) can be shown as an unwound representation (24) with deformations on a monitor (17) that is connected to the evaluation unit (3).

11. The continuous press according to any one of claims 8 to 10, **characterised in that** by way of the control unit (4) to regulate the steel belt speed, on the basis of recorded distances between the starting point of the detector measurement (27) and the deformation, the drive of the steel belt (5a, 5b) is able to move critical deformations to a maintenance station.

12. The continuous press according to any one of claims 8 to 11, **characterised in** at least one light line extending over the width of the steel belt is used as the light pattern (16).

## Revendications

1. Procédé de contrôle d'au moins une bande d'acier en circulation (5a, 5b) dans une presse en continu (1) pour des panneaux à base de matériaux, en particulier des panneaux à base de matériaux dérivés du bois, concernant des déformations, sachant qu'à l'aide de la bande d'acier (5a, 5b) une pression est exercée sur un tapis de compression pour réaliser le panneau à base de matériaux à une vitesse de bande présélectionnée et sachant que la bande d'acier en circulation (5a, 5b) est contrôlée du point de vue des déformations par au moins un détecteur optoélectronique (2) au moins sur un côté de la bande d'acier (5a, 5b), un émetteur de lumière (14) émettant un motif lumineux (16) sur la bande d'acier (5a, 5b) et un récepteur de lumière (15) recevant le motif lumineux (16) dans un procédé de réflexion et transmettant à une unité d'évaluation (3) les variations constatées, **caractérisé en ce que**
la bande d'acier (5a, 5b) comporte un point de début de la mesure de détection (27), qui est saisi par le détecteur optoélectronique (2) et les déformations identifiées sont transmises à l'unité d'évaluation (3) avec une valeur de temps, de distance et d'éloignement de ce point de début de la mesure de détection (27).

2. Procédé selon la revendication 1, **caractérisé en ce que** la bande d'acier (5a, 5b) est dotée d'un marquage de référence, qui est saisi par le détecteur optoélectronique en tant que point de début de la mesure de détection (27).

3. Procédé selon la revendication 1 ou 2, **caractérisé en ce qu'**à chaque passage d'une déformation (25) par le détecteur optoélectronique (2), une indication de temps (30) est conjointement mémorisée.

4. Procédé selon l'une quelconque des revendications 1 à 3, **caractérisé en ce que** pour au moins un autre passage d'une déformation (25) par le détecteur optoélectronique (2), la taille d'image de la déformation (25) est comparée à un des passages passés.

5. Procédé selon l'une quelconque des revendications 1 à 4, **caractérisé en ce qu'**une représentation (24) développée de préférence bidimensionnelle de la bande d'acier (5a, 5b) avec les représentations de déformation est produite par l'unité d'évaluation (3) sur un écran de contrôle (17).

6. Procédé selon l'une quelconque des revendications 3 à 5, **caractérisé en ce qu'**une déformation nécessitant une réparation (25) est déplacée à une position d'entretien (18) appropriée en tenant compte de la valeur de temps, de distance et d'éloignement mémorisée en référence au point de début de la mesure de détection (27) dans l'unité d'évaluation (3) et y est maintenue.

7. Procédé selon l'une quelconque des revendications 1 à 6, **caractérisé en ce que** la couleur et/ou la luminosité de l'émetteur de lumière (14) est réglée à l'aide d'un système d'étalonnage (22) dans le champ visuel du récepteur de lumière (15).

8. Presse en continu avec
- au moins une bande d'acier en circulation (5a, 5b) pour le compactage d'un tapis de compression déplacé au moyen d'une pression appliquée par un capteur de pression (8),
- une commande (4) pour la régulation de la vitesse de la bande d'acier et
- un dispositif de contrôle optoélectronique (2), qui comprend un émetteur de lumière (14), qui émet un motif lumineux (16) sur la bande d'acier (5a, 5b) et un récepteur de lumière (15), qui est adapté pour recevoir en procédé de réflexion le motif lumineux (16) et transmettre à une unité d'évaluation (3) les variations constatées,
**caractérisée en ce que** la presse en continu est adaptée pour exécuter le procédé selon l'une quelconque des revendications 1 à 7,
**en ce que** la bande d'acier (5a, 5b) comporte un point de début de la mesure de détection (27), qui peut être saisi par le détecteur optoélectronique (2) fixé,
et **en ce que** toutes les autres déformations identifiées peuvent être transmises avec une valeur de temps ou de distance et d'éloignement depuis ce point de début de la mesure de détection à l'unité d'évaluation (3) et y être mémorisées.

9. Presse en continu selon la revendication 8, **caractérisée en ce qu'**au moins une déformation saisie (25) peut être dotée d'une indication de temps (30) à chaque passage par le détecteur optoélectronique (2) dans l'unité d'évaluation (3).

10. Presse en continu selon la revendication 8 ou 9, **caractérisée en ce qu'**une reproduction bidimensionnelle de la bande d'acier (5a, 5b) peut être représentée avec les déformations en tant qu'évolution (24) sur un écran de contrôle (17), qui est couplé à l'unité d'évaluation (3) .

11. Presse en continu selon l'une quelconque des revendications 8 à 10, **caractérisée en ce que** le système d'entraînement de la bande d'acier (5a, 5b) est adaptée à l'aide de la commande (4) à la régulation de la vitesse de la bande d'acier pour déplacer à un poste d'entretien les déformations critiques sur la base des distances enregistrées entre le point de début de la mesure de détection (27) et la déformation.

12. Presse en continu selon l'une quelconque des revendications 8 à 11, **caractérisée en ce qu'**au moins une ligne lumineuse portant sur la largeur de la bande d'acier est utilisée en tant que motif lumineux (16).
